# EUROPEAN PATENT APPLICATION

(11) **EP 4 745 422 A1**
(43) Date of publication of application: **20.05.2026**
(21) Application number: 25209928.8
(22) Date of filing: 20.10.2025
(51) Int. Cl.: F16D 7/02, F16D 43/21

(54) **MULTI-PLATE COMPACT FRICTION CLUTCH FOR ACTUATORS**

(30) Priority: 13.11.2024 US 202418946228
(71) Applicant: Tesla, Inc., Austin, TX 78725 (US)
(72) Inventor: NAWABY SHIRAZI, Sasan, Austin, Texas 78725 (US)
(74) Representative: Bryn-Jacobsen, Caelia

(57) **Abstract**

In some examples, a configurable multi-plate compact friction clutch is provided for use in vehicle applications, particularly for protecting actuators from excessive torque. The friction clutch includes an output coupling, a center housing, alternating metal and thermoplastic friction plates engaged with the center housing and output coupling respectively, and a biasing member applying a compressive force to the friction plates. The clutch transfers torque between an input and output while allowing slippage to protect against over-torque conditions. The design enables consistent performance across a wide temperature range and can be scaled for various applications. The clutch's compact nature and silent operation make it suitable for use in vehicle charging door actuators and other automotive closure systems.

## Description

### TECHNICAL FIELD

The present disclosures relate to friction clutch mechanisms and, in some examples, to systems and devices for protecting actuators from excessive torque in vehicle applications.

### BACKGROUND

When a vehicle door or panel actuator is directly connected to a vehicle door or panel for example, it may suffer damage if the door or panel is "forced" closed by an operator. For example, after charging or refueling a vehicle, a driver may inadvertently (or deliberately if in a rush) try to manually force a fuel door or charging panel closed, when instead this action should be left to the actuator. If the actuator is a rotary actuator, for example, excessive torque may be applied to internal actuator mechanisms and/or connecting linkages, causing harm or breakage. Attempts to mitigate this problem have included interposing a clutch or relief mechanism between the actuator and the door or panel so that excessive force or torque may be relieved.

Friction clutches can more generally play a significant role in various automotive applications, enabling the controlled transfer of torque between components. These mechanisms are utilized in diverse scenarios, from powertrain systems to auxiliary equipment. The design and implementation of friction clutches nevertheless present ongoing challenges for engineers, particularly in achieving consistent performance across varying operational conditions.

### BRIEF SUMMARY

Some examples described herein relate to a multi-plate miniature (or compact) friction clutch system designed for use in vehicle applications, particularly for protecting actuators and other components from excessive torque. Present examples seek to address challenges in torque control and thermal management for compact mechanisms, such as vehicle charging door actuators, and in other applications.

In some examples, a friction clutch includes an output coupling, a center housing, alternating metal and thermoplastic friction plates engaged with the center housing and output coupling respectively, and a biasing member applying a compressive force to the friction plates. The clutch transfers torque between an input and output while allowing slippage to protect against over-torque conditions. The design enables consistent performance across a wide temperature range and can be scaled for various applications. The clutch's compact nature and silent operation make it suitable for use in vehicle charging door actuators and other automotive closure systems. The clutch components work together to provide controlled torque transfer and protection against over-torque conditions.

In some more specific examples, the clutch components include an output coupling (or output component), a press nut, a wave spring, alternating metal (for example, steel) and thermoplastic (for example, polyoxymethylene POM) friction plates, and a center (or bottom) housing. Other friction plate materials are possible.

In some examples, a friction clutch includes an input component, such as a worm gear connected to the center housing, for accepting torque from an actuator or other motor, for example.

In some examples, the clutch components are assembled into a compact cylindrical housing, allowing for integration into space-constrained applications such as vehicle charging door mechanisms. Other applications and uses of the friction clutch are possible.

In some examples, a preconfigured interaction between the alternating steel and POM friction plates transfers torque normally in a specified or controlled manner, while allowing slippage between the friction plates in excessive or abnormal conditions, for example when a driver seeks to "force" a door or panel closed, as described above.

In some examples, the friction plates are stacked or alternate with each other in a specific sequence, with the metal (for example steel) friction plates engaging with the center housing and the thermoplastic (for example POM) friction plates engaging with the output coupling. This arrangement allows for torque transfer between the input component (for example a worm gear connected between the center housing and an actuator) and the output component connected to the mechanism being driven (for example, a charging door or panel). Other arrangements of the various components and connections to the friction plates are possible.

In some examples, the wave spring plays a significant role in the clutch's operation and configurability. The wave spring applies a compressive force to the stack of friction plates, creating the necessary friction for torque transfer. The spring force can be adjusted by the press nut to achieve different torque capacities, allowing the clutch to be tailored for specific applications.

One of the characteristics of some example friction clutches herein is their ability to protect against over-torque conditions. In some examples, this protective ability is configurable and may be adjusted in use or in the field after initial installation in a vehicle, for example. When a torque applied to a given door or panel operating system exceeds a predetermined threshold, the friction plates in the clutch are designed to slip relative to each other. This slippage can prevent or at least mitigate excessive torque from being transmitted to sensitive components, thereby protecting the actuator and associated mechanisms from damage.

In some examples, a performance or characteristic of the clutch can be fine-tuned through various parameters. These include the number of friction plates, the spring force generated by the wave spring and/or the press nut, the friction plate materials, and the friction plate dimensions. For example, torque slippage levels can range from 1 Newton meter (Nm) to 100 Nm, depending on the specific design parameters chosen. In some examples, the clutch is designed to operate effectively across a wide temperature range, from -40°C to +85°C for example, seeking to address the challenge of maintaining consistent performance in varying environmental conditions.

The coefficient of friction between the friction plates can also play a factor in the clutch's performance, independently or in conjunction with other parameters. The coefficient of friction between alternate plates in a stacked array can range from 0.1 to 0.6, depending on the materials used and the specific application requirements. The selection of materials for the friction plates themselves, such as Delrin 500P for the thermoplastic (or POM) plates and steel for the metal plates, may be helpful in achieving the desired friction characteristics and wear resistance.

The compact nature of some examples allows for flexibility in implementation. An example clutch can be scaled to fit various applications, with a baseline outer diameter of the clutch being 7.7 mm and inner diameter 3.6 mm. Other outer and internal dimensions are possible. This scalability enables example clutches to be used not only in charging door actuators but potentially in other automotive closure systems and/or space-constrained applications as well.

Some example friction clutches herein include an ability to maintain consistent torque over a wide temperature range. This is addressed in some examples through material selection and design considerations, such as matching the coefficient of thermal expansion (CTE) of the components. Additionally, some example designs allow for partial lubrication of the friction plates, which can further enhance temperature stability and reduce wear.

In some examples, a performance of a friction clutch may be characterized by other parameters. For example, a maximum recommended slippage speed may be 1-2 RPM, which may be distinct from the maximum speed of the actuator itself. Other slippage speeds are possible. In some examples, this slippage speed is the rate at which the clutch is designed to operate when it has reached its maximum torque capacity and is actively protecting the system from over-torque.

In summary, in practical applications such as for a vehicle charging door, some examples of a friction clutch herein seek to enable safe manual operation of the connected door without risking damage to the door actuator or drive mechanisms. If a user applies excessive force to open or close the door for example, the clutch will slip, allowing the door to move without transmitting harmful forces back through the system.

Some examples also addresses an issue of audible feedback during operation. Unlike some existing clutch designs that may produce a clicking sound when engaged, some examples herein are designed to operate silently. In some examples, this may enhance the perceived quality of the mechanism or the vehicle to which it is fitted.

### BRIEF DESCRIPTION OF THE DRAWINGS

Throughout the drawings, reference numbers may be re-used to indicate correspondence between referenced elements. The drawings are provided to illustrate examples of the subject matter described herein and not to limit the scope thereof.
**FIG. 1** illustrates an example system incorporating a friction clutch, according to some examples described herein.
**FIG. 2** shows an exploded view of components of a friction clutch, according to some examples described herein.
**FIG. 3** shows an exploded view of components of a friction clutch, according to some examples described herein.
**FIG. 4A** shows a detailed exploded view of individual components of a friction clutch, according to some examples described herein.
**FIG. 4B** shows a sectional view of an assembled friction clutch, according to some examples described herein.
**FIG. 4C** provides a detailed view of a portion of the friction clutch shown in **FIG. 4B****.**
**FIG. 5** shows a schematic top view of a friction plate stack of a friction clutch, according to some examples described herein.
**FIG. 6** is a flowchart depicting example operations a method 600, according to some examples.

### DETAILED DESCRIPTION

As mentioned above, friction clutches can play a significant role in various automotive applications, enabling the controlled transfer of torque between components. For example, vehicle charging door actuators may face unique challenges in torque control and thermal management. These compact mechanisms must reliably operate in diverse environmental conditions while maintaining precise control over door movement. The actuators are subjected to frequent use cycles and potential user-applied forces, necessitating robust torque limitation to prevent damage to internal components.

Conventional clutch designs used in charging door actuators often struggle to provide consistent performance across a wide temperature range. As ambient temperatures fluctuate, thermal expansion and contraction of materials can lead to variations in clutch engagement and slippage characteristics. This inconsistency may result in unreliable door operation or premature wear of actuator components.

Additionally, the compact nature of charging door actuators may limit the space available for heat dissipation. During repeated cycles or when subjected to excessive force, clutch mechanisms can experience rapid temperature increases. This localized heating can further exacerbate performance variations and potentially lead to premature failure of clutch components or surrounding actuator elements. Present examples seek to address these thermal management and torque control challenges and seek to provide reliable and long-lasting charging door actuator systems.

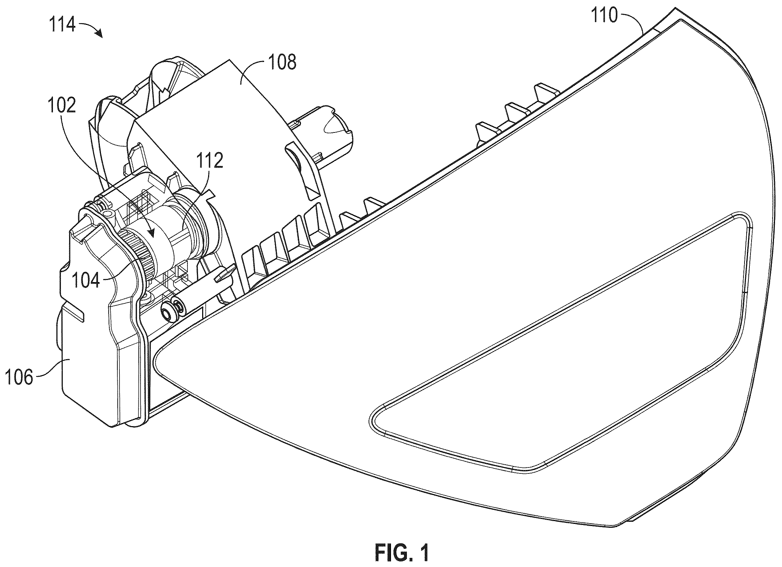

With reference to **FIG. 1****,** an example friction clutch 102 is shown in use in an example practical application in an example system 114 for opening and closing a charging port door 110.

On an input side of the friction clutch 102, the friction clutch 102 includes or is connected to a worm gear 104 that is driven by a rotary door actuator (not visible) contained in an actuator housing 106. The door actuator includes an internal motor that supplies torque during normal operations to drive a charging port door 110 between open and closed positions of the charging port door 110. The charging port door 110 may cover and protect a charging port on an electric vehicle, for example, and be openable under action of the actuator so that a vehicle user can attach a charging cable to the charging port. Other applications are possible, such as opening or closing a fuel door (or cap) on a vehicle powered by an internal combustion engine. On an output side of the friction clutch 102, the friction clutch 102 includes an output coupling 112 that is connected to a door substructure 108 of the charging port door 110.

In some examples of normal operation of the charging port door 110, the user may send an open or close instruction to the door actuator by manually pushing a selector button located inside the vehicle, for example. Other modes of closing or opening are possible, for example an automatic opening or closing of the charging port door 110 when the vehicle senses that it is stationary adjacent a charging or refueling station, or when a charging or refueling line has been disconnected from the charging port or fuel cap.

In some more extreme or abnormal operations of the charging port door 110, a user (for example the vehicle driver) may inadvertently, or deliberately if in a rush, try to force the charging port door 110 manually open or closed, when instead this action should be powered by the door actuator. If the door actuator is a rotary actuator (as here for example), excessive torque may be retro-applied to the door actuator, the motor, and other internal actuator mechanisms and/or connecting linkages, causing harm and even breakage in some cases. In this example practical application, the friction clutch 102 seeks to enable safe manual operation of the connected charging port door 110 without risking damage to the door actuator or drive mechanisms. If a user applies excessive force to open or close the charging port door 110, the friction clutch 102 will slip, as described further below, allowing the charging port door 110 to move without transmitting harmful forces back through the system.

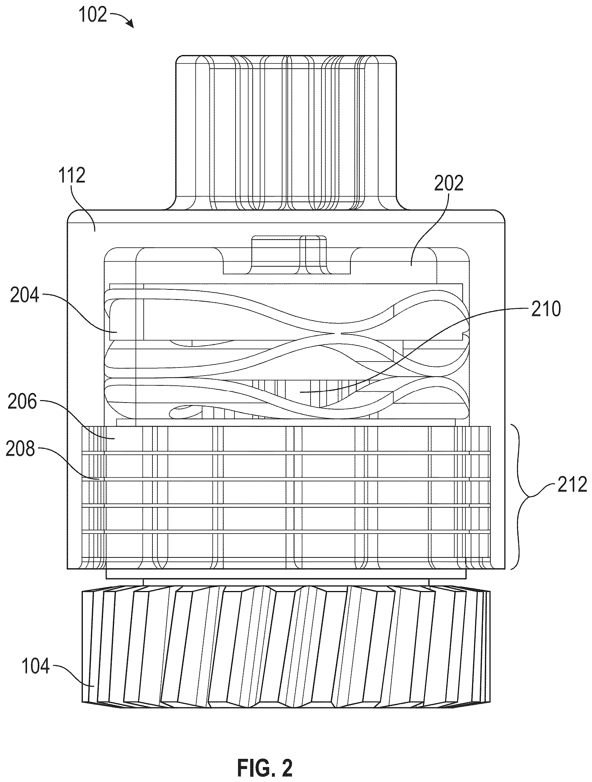

In **FIG. 2****,** example components of a friction clutch 102 are shown in pictorial, ghosted form, such that internal components are visible in the view. The illustrated example components include an output coupling 112 that serves as an external housing or output component of the friction clutch 102 and can be connected to another driven mechanism (for example a door substructure 108, or a charging port door 110, or another component).

The friction clutch 102 further includes a press nut 202 that allows for adjustment of a spring force generated by a wave spring 204. The wave spring 204 applies compressive force to the illustrated example friction plate stack 212. The friction clutch 102 further comprises a center housing 210 that connects to the input side, or an input component of the friction clutch 102 (for example, the worm gear 104).

The friction plate stack 212 includes alternating or interleaved metal friction plates 208 (for example, steel) and thermoplastic friction plates 206 (for example, polyoxymethylene or POM). Here, the illustrated example friction plate stack 212 includes five thermoplastic friction plates 206 and four individually interleaved metal friction plates 208. Other combinations and sequences of the thermoplastic friction plates 206 and the metal friction plates 208 are possible.

The thermoplastic friction plates 206 and the metal friction plates 208 can, when slippage occurs or is desired to shed excess torque in abnormal conditions, rotate between and relative to each other in the interleaved friction plate stack 212. In normal use, when full torque is desired to be transferred to close a door, for example, the thermoplastic friction plates 206 and the metal friction plates 208 have been pushed together sufficiently by the wave spring 204 and the press nut 202 to create adequate frictional engagement between the interleaved plates so that the thermoplastic friction plates 206 and the metal friction plates 208 rotate together.

In normal use, the upper and lower faces of the thermoplastic friction plates 206 and the metal friction plates 208 frictionally engage with one another to transfer full torque from the input side of the friction clutch 102 to the output side of the friction clutch 102. In some examples, if there is any slippage of the friction clutch 102, this is allowed or enabled within an accepted degree, or within a predetermined slippage speed range, for example 1-2 RPM differential rotational speed between the thermoplastic friction plates 206 and the metal friction plates 208. Other slippage speeds are possible, for example in a range of 1-10 RPM, or 1-20 RPM.

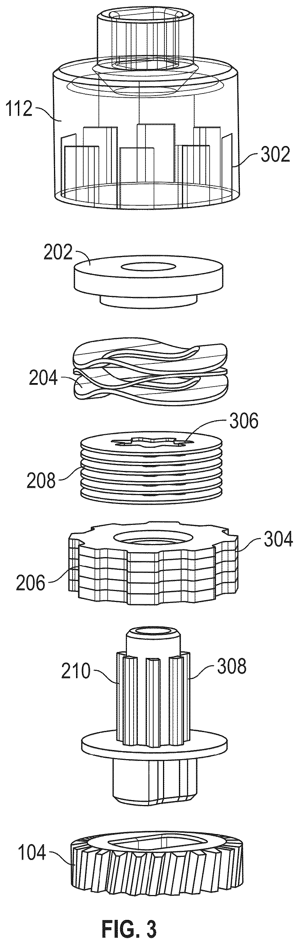

**FIG. 3** provides a more detailed exploded view of the components of **FIG. 2** showing additional features. Here, the friction plates in the friction plate stack 212 of **FIG. 2** are not shown in interleaved form but are separated out in individual stacks for clarity. The additional features may include, as shown for example, the provision on the output coupling 112 of internal grooves 302 that can engage with tabs 304 on the outer periphery of the thermoplastic friction plates 206 to transmit torque to the output coupling 112 from the thermoplastic friction plates 206 when driven in use. The driven thermoplastic friction plates 206 frictionally engage with the driving metal friction plates 208 to transfer torque, as described above.

Further, the center housing 210 includes external splines 308 that can engage with slots 306 around an internal periphery of the metal friction plates 208 to transmit torque to the metal friction plates 208 from the center housing 210. The center housing 210 is driven by the worm gear 104 that receives torque from an actuator, as described above.

In some examples, the interaction between the alternating thermoplastic friction plates 206 and the metal friction plates 208 can transfer torque in a specified or controlled manner in normal operation of the friction clutch 102, while allowing slippage between the friction plates in excessive or abnormal conditions, for example when a driver seeks to force a door or panel closed, as described above.

In some examples, the friction plates are stacked or alternate with each other in a specific sequence, with the metal friction plates 208 engaging with the center housing 210 and the thermoplastic friction plates 206 engaging with the output coupling 112, for example as described just above. This flexible arrangement of the friction plate stack 212 of the friction clutch 102 allows for a configurable or adjustable torque transfer between an input component (for example a worm gear connected between the center housing and an actuator) and an output component connected to the mechanism being driven (for example, a charging door or panel). Other arrangements of the various components and connections to the friction plates are possible.

In some examples, the wave spring 204 plays a significant role in the operation and configurability of the friction clutch 102. The wave spring 204 applies a compressive force to the stack 212 of friction plates, creating the necessary friction for torque transfer. The spring force can be adjusted by the press nut 202 to achieve different torque transfer and slippage capacities, allowing the friction clutch 102 to be tailored for specific applications.

One of the primary advantages of the illustrated example friction clutch 102 is the ability and high configurability to protect against over-torque conditions. When a torque applied to a given system exceeds a predetermined threshold, the friction plates are designed to slip relative to each other. This slippage can prevent or at least mitigate excessive torque from being transmitted to sensitive components, thereby protecting the actuator and associated mechanisms from damage. This threshold level of torque transfer and/or slippage can be configured or adjusted conveniently as described for example below.

The predetermined torque slippage threshold of the friction clutch 102 can be set or adjusted based on a number of factors, for example: the number, size, and/or material type of the thermoplastic friction plates 206 and the metal friction plates 208 in the friction plate stack 212; a coefficient of friction between the thermoplastic friction plates 206 and the metal friction plates 208; an application of lubricant or a friction-release or friction-enhancing material to the thermoplastic friction plates 206 and/or the metal friction plates 208; a surface roughness of the thermoplastic friction plates 206 and/or the metal friction plates 208; a compressive force generated by the wave spring 204; and/or an adjustment to the compressive force effected by the press nut 202. Other factors are possible.

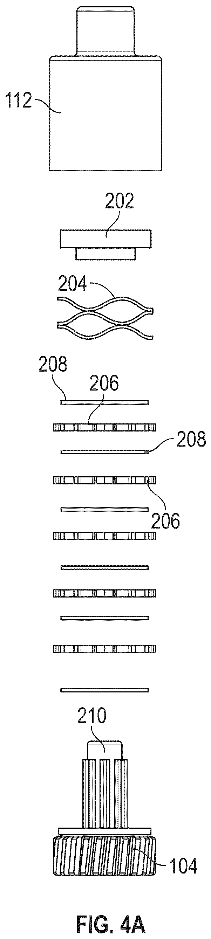

**FIG. 4A** shows a view similar to **FIG. 2****,** but here the metal friction plates 208 and the thermoplastic friction plates 206 are shown separated out for clarity. The worm gear 104 is also shown attached to the center housing 210.

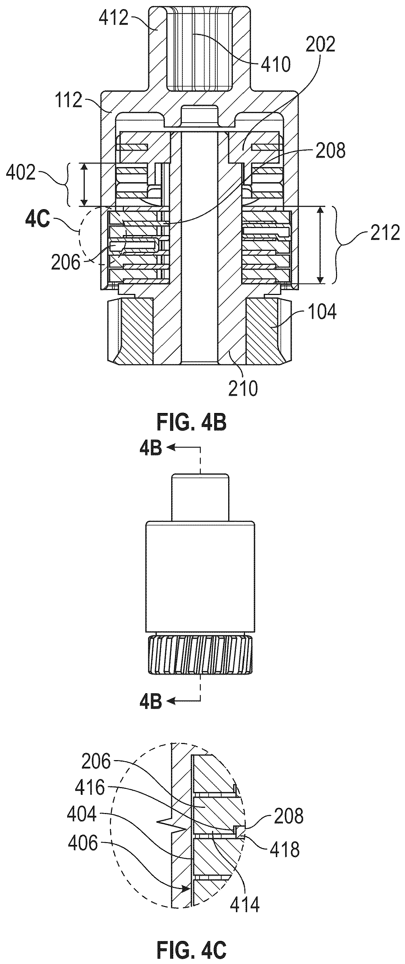

**FIG. 4B** provides a cross-sectional general arrangement of the friction clutch 102 and includes an example friction plate stack 212 height and an example wave spring height 402. In some examples, the height of the friction plate stack 212 and the wave spring height 402 may be in the range 7 millimeters (mm) to 20mm, and 3mm to 10mm, respectively. Other heights of the friction stack plate are possible.

Additionally as shown, the output coupling 112 has one or more output splines 410 provided in an integral output connection collar 412 provided at the output side of the friction clutch 102. Other convenient output connections are possible.

In some examples, the thermoplastic friction plates 206 and the metal friction plates 208 are concentric in the sense that their inner and outer diameters (excluding the respective tabs 304 and slots 306) overlie and match one another. The overlapping faces of the thermoplastic friction plates 206 and metal friction plates 208 are hence coextensive and this seeks to maximize, for space efficiency, the plate area in the friction plate stack 212 available for frictional engagement and configuring the torque transfer and slippage characteristics of the friction clutch 102.

Other friction plate sizes and configurable frictional engagement arrangements are possible. For example, as shown in the detailed view of **FIG. 4C****,** to further improve or utilize the potential frictional engagement between plates in a space efficient manner, an inner surface 416 of a peripherally outer portion 414 of the thermoplastic friction plates 206 overlies in step-wise manner a radially outwardly facing friction wall 418 located around an outer circumference of an adjacent metal friction plate 208. This step-wise, overlapping arrangement may be provided on a single pair of adjacent friction plates, on a combination of adjacent or spaced pairs of friction plates, or on all friction plates within a specifically configured friction plate stack 212. The step-wise arrangement may be provided in opposite manner in some examples, i.e., with a peripherally outer portion 414 provided one or more of the metal friction plates 208 and a friction wall 418 provided on one or more of the thermoplastic friction plates 206.

**FIG. 4C** also shows further details of the friction plate stack 212, showing for example a nominal clearance 404 between the outer periphery of the thermoplastic friction plates 206 and an inner wall 406 of the output coupling 112. There is also a nominal clearance (not shown in this view) between the inner periphery of the thermoplastic friction plates 206 and the splines 308 of the center housing 210.

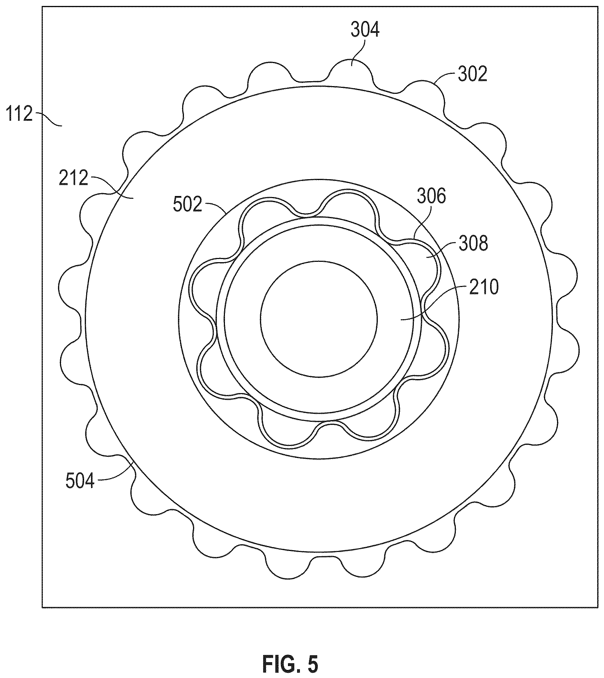

**FIG. 5** shows a schematic top view of a friction plate stack 212. An inner stack diameter 502 and an outer stack diameter 504 of the friction plate stack 212 are shown. These dimensions may be helpful for calculating a threshold torque T transferred by the friction clutch 102. Safety clutch slippage may occur, per design, above the threshold torque.

In some examples, a threshold torque T transmitted by a single face of one friction plate in a friction plate stack 212 may be represented by the following formula, where "D" is an outer friction plate diameter (for example corresponding to the outer stack diameter 504), and "d" is an inner friction plate diameter (for example corresponding to the inner stack diameter 502).
Threshold torque T = = NµF(R1+R2)/2 where
N = the number of friction plates = 10 (for example)
F = the spring force = 60N (for example)
µ= the coefficient of friction of a friction plate = 0.33 (for example)
R1 = outer stack radius = 14mm (for example)
R2= inner stack radius = 7mm (for example)

For an example friction clutch 102, it may thus be determined based on this formula that a threshold torque generated by a single face of one friction plate in the friction plate stack 212 is approximately 0.21 Nm. Assuming a friction clutch 102 includes ten (10) opposed faces of thermoplastic friction plates 206 and metal friction plates 208 in a configured friction plate stack 212, an overall threshold torque T of the friction clutch 102 may be calculated as approximately 2.1 Nm.

Other performance parameters of example friction clutches 102 may include torque slippage levels in a range of 1 Nm to 100 Nm, depending on design parameters; a temperature/torque performance range of -40°C to +85°C; a coefficient of friction between friction plates in a range of 0.1 to 0.6; a wave spring force (generated for example by a spring washer stack) in a range of 60N or higher, depending on design needs; friction plate dimensions wherein an outer stack diameter 504 is in a range of 5 millimeters (mm) to 15 mm (for example 7.7 mm) and an inner stack diameter 502 is in a range 2mm to 5 mm (for example, 3.6 mm); a number or sequence of thermoplastic friction plates 206 and/or metal friction plates 208, for example a minimum of two thermoplastic friction plates 206 and/or two interleaved or stacked metal friction plates 208, and a total number of friction plates depending on a desired overall size or threshold torque capacity of the friction clutch 102; and a slippage speed in a range of 1-2 RPM, or 1-10 RPM, or 1-20 RPM.

The performance of the friction clutch 102 can thus be conveniently fine-tuned in some examples by adjusting various parameters such as the number of friction plates, spring force, plate materials, and plate dimensions. This allows the friction clutch 102 to be tailored for specific applications while maintaining a compact design suitable for space-constrained environments like vehicle charging door mechanisms. Some examples also address thermal management challenges by carefully selecting materials with matched coefficients of thermal expansion and allowing for partial lubrication of the plates. This helps maintain consistent performance across a wide temperature range, which may be crucial for automotive applications.

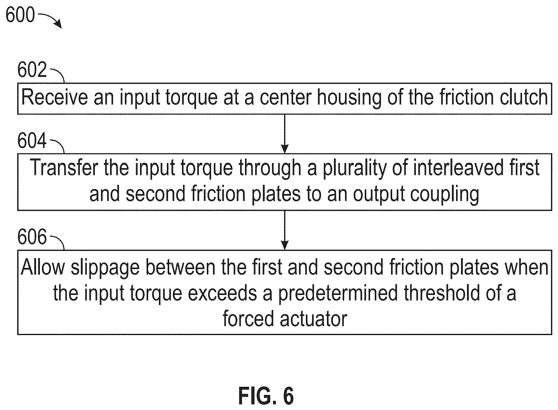

Some examples herein include methods. With reference to **FIG. 6****,** example operations in a method 600 of operating a friction clutch are now described. In operation 602, method 600 receives an input torque at a center housing of the friction clutch. In operation 604, method 600 transfers the input torque through a plurality of interleaved first and second friction plates to an output coupling. In operation 606, method 600 allows slippage between the first and second friction plates when the input torque exceeds a predetermined threshold of a forced actuator.

The method 600 may further include applying a compressive force to the first and second friction plates using a biasing member. The method 600 may further include adjusting the compressive force applied by the biasing member using a press nut. In some examples, the first friction plates are engaged with the center housing and the second friction plates are engaged with the output coupling. In some examples, the first friction plates comprise metal and the second friction plates comprise a thermoplastic material.

In some examples, the method 600 may further include maintaining a consistent torque profile within a temperature range of -40°C to +85°C. In some examples, the friction clutch has a maximum slippage speed of 1-2 RPM. In some examples, the friction clutch is used in a vehicle charging door actuator system.

In some examples, the method 600 further includes partially lubricating the first and second friction plates to enhance temperature stability and reduce wear. In some examples, a coefficient of friction between the first and second friction plates is between 0.1 and 0.6. Other technical features may be readily apparent to one skilled in the art from the following figures, descriptions, and claims.

### EXAMPLES

Some examples may include one or more of the following aspects.

Example 1 includes a configurable friction clutch comprising: an output coupling; a center housing; a plurality of first friction plates engaged with the center housing; a plurality of second friction plates engaged with the output coupling and interleaved with the first friction plates; and an adjustable biasing member configured to apply a compressive force to the first and second friction plates.

Example 2 includes the friction clutch of example 1, wherein the biasing member comprises a wave spring.

Example 3 includes the friction clutch of example 1 or 2, wherein the friction clutch is adjustable and further comprises a press nut configured to adjust a force applied by the biasing member, thereby to adjust a threshold torque transmitted by the friction clutch.

Example 4 includes the friction clutch of example 3, wherein the force applied by the biasing member allows slippage between the first and second plates at a received torque exceeding the threshold torque.

Example 5 includes the friction clutch of any one of examples 1-4, wherein the first friction plates comprise metal and the second friction plates comprise a thermoplastic material.

Example 6 includes the friction clutch of example 5, wherein the metal comprises steel and the thermoplastic material comprises polyoxymethylene (POM).

Example 7 includes the friction clutch of any one of examples 1-6, wherein the center housing comprises external splines that engage with slots in the first friction plates.

Example 8 includes the friction clutch of any one of examples 1-7, wherein the output coupling comprises internal grooves that engage with tabs on the second friction plates.

Example 9 includes the friction clutch of any one of examples 1-8, wherein the friction clutch is configured to maintain a torque profile within a temperature range of -40°C to +85°C.

Example 10 includes the friction clutch of any one of examples 1-9, wherein the friction clutch has an outer diameter between 7.7 mm and 100 mm.

Example 11 includes the friction clutch of any one of examples 1-10, further comprising an input component connected to the center housing and configured to receive torque from an actuator.

Example 12 includes a method of operating a configurable friction clutch, the method comprising: receiving an input torque at a center housing of the friction clutch; transferring the input torque through a plurality of interleaved first and second friction plates to an output coupling; and configuring an allowable slippage between the first and second friction plates when the input torque exceeds a predetermined threshold.

Example 13 includes the method of example 12, wherein configuring an allowable slippage at least comprises applying a compressive force to the first and second friction plates using a biasing member.

Example 14 includes the method of example 13, further comprising adjusting the compressive force applied by the biasing member using a press nut.

Example 15 includes the method of example 12 or 13, wherein the first friction plates are engaged with the center housing and the second friction plates are engaged with the output coupling.

Example 16 includes the method of any one of examples 12-15, wherein the first friction plates comprise metal and the second friction plates comprise a thermoplastic material.

Example 17 includes the method of any one of examples 12-16, further comprising maintaining a consistent torque profile within a temperature range of -40°C to +85°C.

Example 18 includes the method of any one of examples 12-17, wherein the friction clutch has a maximum slippage speed of 1-2 RPM.

Example 19 includes the method of any one of examples 12-18, further comprising partially lubricating the first and second friction plates.

Example 20 includes the method of any one of examples 12-19, wherein a coefficient of friction between the first and second friction plates is between 0.1 and 0.6.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems.

Conditional language such as, among others, "can," "could," "might," or "may," unless specifically stated otherwise, are otherwise understood within the context as used in general to convey that some examples include, while other examples do not include, some features, elements, and/or steps. Thus, such conditional language is not generally intended to imply that features, elements, and/or steps are in any way necessary for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

It should be emphasized that many variations and modifications may be made to the above-described examples, the elements of which are to be understood as being among other acceptable examples. All such modifications and variations are intended to be included herein within the scope of this disclosure.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

It will also be appreciated that one or more of the elements depicted in the drawings/figures can also be implemented in a more separated or integrated manner, or even removed or rendered as inoperable in certain cases, as is useful in accordance with a particular application.

Other examples are set out in the clauses below:
1. A configurable friction clutch comprising:
   an output coupling;
   a center housing;
   a plurality of first friction plates engaged with the center housing;
   a plurality of second friction plates engaged with the output coupling and interleaved with the plurality of first friction plates in a friction plate assembly; and
   an adjustable biasing member configured to apply a compressive force to the interleaved first and second friction plates in the friction plate assembly.
2. The configurable friction clutch of clause 1, wherein the adjustable biasing member comprises a wave spring.
3. The configurable friction clutch of clause 1 or 2, further comprising a press nut configured to adjust a force applied by the adjustable biasing member, thereby to adjust a threshold torque transmitted by the configurable friction clutch.
4. The configurable friction clutch of clause 3, wherein the force applied by the adjustable biasing member allows slippage between the pluralities of first and second plates at a received torque exceeding the threshold torque.
5. The configurable friction clutch of any one of the preceding clauses, wherein the plurality of first friction plates comprise metal and the plurality of second friction plates comprise a thermoplastic material.
6. The configurable friction clutch of clause 5, wherein the metal comprises steel and the thermoplastic material comprises polyoxymethylene (POM).
7. The configurable friction clutch of any one of the preceding clauses, wherein the center housing comprises external splines that engage with slots in the plurality of first friction plates.
8. The configurable friction clutch of any one of the preceding clauses, wherein the output coupling comprises internal grooves that engage with tabs on the plurality of second friction plates.
9. The configurable friction clutch of any one of the preceding clauses, wherein the configurable friction clutch is configured to maintain a torque profile within a temperature range of -40°C to +85°C.
10. The configurable friction clutch of any one of the preceding clauses, wherein the configurable friction clutch has an outer diameter between 7.7 mm and 100 mm.
11. The configurable friction clutch of any one of the preceding clauses, further comprising an input component connected to the center housing and configured to receive torque from an actuator.
12. A method of operating a configurable friction clutch, the method comprising:
   receiving an input torque at a center housing of the configurable friction clutch;
   transferring the input torque through a plurality of interleaved first and second friction plates to an output coupling; and
   configuring an allowable slippage between the interleaved first and second friction plates when the input torque exceeds a predetermined threshold.
13. The method of clause 12, wherein configuring an allowable slippage at least comprises applying a compressive force to the interleaved first and second friction plates using a biasing member.
14. The method of clause 13, further comprising adjusting the compressive force applied by the biasing member using a press nut.
15. The method of any one of clauses 12-14, wherein the first friction plates are engaged with the center housing and the second friction plates are engaged with the output coupling.
16. The method of any one of clauses 12-15, wherein the first friction plates comprise metal and the second friction plates comprise a thermoplastic material.
17. The method of any one of clauses 12-16, further comprising maintaining a consistent torque profile within a temperature range of -40°C to +85°C.
18. The method of any one of clauses 12-17, wherein the configurable friction clutch has a maximum slippage speed of 1-2 RPM.
19. The method of any one of clauses 12-18, further comprising partially lubricating the first and second friction plates.
20. The method of any one of clauses 12-19, wherein a coefficient of friction between the first and second friction plates is between 0.1 and 0.6.

While the above is a detailed description of some examples of the inventive subject matter, various alternatives, modifications, and equivalents may be used.

## Claims

1. A configurable friction clutch comprising:
an output coupling;
a center housing;
a plurality of first friction plates engaged with the center housing;
a plurality of second friction plates engaged with the output coupling and interleaved with the plurality of first friction plates in a friction plate assembly; and
an adjustable biasing member configured to apply a compressive force to the interleaved first and second friction plates in the friction plate assembly.

2. The configurable friction clutch of claim 1, wherein the adjustable biasing member comprises a wave spring.

3. The configurable friction clutch of claim 1 or 2, further comprising a press nut configured to adjust a force applied by the adjustable biasing member, thereby to adjust a threshold torque transmitted by the configurable friction clutch.

4. The configurable friction clutch of claim 3, wherein the force applied by the adjustable biasing member allows slippage between the pluralities of first and second plates at a received torque exceeding the threshold torque.

5. The configurable friction clutch of any one of the preceding claims, wherein the plurality of first friction plates comprise metal and the plurality of second friction plates comprise a thermoplastic material.

6. The configurable friction clutch of claim 5, wherein the metal comprises steel and the thermoplastic material comprises polyoxymethylene (POM).

7. The configurable friction clutch of any one of the preceding claims, wherein the center housing comprises external splines that engage with slots in the plurality of first friction plates.

8. The configurable friction clutch of any one of the preceding claims, wherein the output coupling comprises internal grooves that engage with tabs on the plurality of second friction plates.

9. The configurable friction clutch of any one of the preceding claims, wherein the configurable friction clutch is configured to maintain a torque profile within a temperature range of -40°C to +85°C.

10. The configurable friction clutch of any one of the preceding claims, wherein the configurable friction clutch has an outer diameter between 7.7 mm and 100 mm.

11. The configurable friction clutch of any one of the preceding claims, further comprising an input component connected to the center housing and configured to receive torque from an actuator.

12. A method of operating a configurable friction clutch, the method comprising:
receiving an input torque at a center housing of the configurable friction clutch;
transferring the input torque through a plurality of interleaved first and second friction plates to an output coupling; and
configuring an allowable slippage between the interleaved first and second friction plates when the input torque exceeds a predetermined threshold.

13. The method of claim 12, wherein configuring an allowable slippage at least comprises applying a compressive force to the interleaved first and second friction plates using a biasing member.

14. The method of claim 13, further comprising adjusting the compressive force applied by the biasing member using a press nut.

15. The method of any one of claims 12-14, wherein the first friction plates are engaged with the center housing and the second friction plates are engaged with the output coupling; or optionally
wherein the first friction plates comprise metal and the second friction plates comprise a thermoplastic material; or optionally
further comprising maintaining a consistent torque profile within a temperature range of -40°C to +85°C; or optionally
wherein the configurable friction clutch has a maximum slippage speed of 1-2 RPM; or optionally
further comprising partially lubricating the first and second friction plates; or optionally
wherein a coefficient of friction between the first and second friction plates is between 0.1 and 0.6.
